# EUROPÄISCHE PATENTSCHRIFT

(11) **EP 0 574 990 B1**
(45) Veröffentlichungstag und Bekanntmachung des Hinweises auf die Patenterteilung: **20.01.1999**
(21) Anmeldenummer: 93201655.3
(22) Anmeldetag: 10.06.1993
(51) Int. Cl.: G07F 7/10, G07F 7/02, G07F 7/08

(54) **Verfahren und Schaltungsanordnung zum Prüfen einer Wertkarte**
Method and circuit arrangement for testing a credit card
Procédé et agencement de circuit pour tester une carte de crédit

(30) Priorität: 17.06.1992 DE 4219739
(43) Veröffentlichungstag der Anmeldung: 22.12.1993
(73) Patentinhaber: Philips Patentverwaltung GmbH, 22335 Hamburg (DE); Koninklijke Philips Electronics N.V., 5621 BA Eindhoven (NL)
(72) Erfinder: Armbrust, Dirk, W-2000 Hamburg 1 (DE); Brechtel, Holger, W-2000 Hamburg 1 (DE); Timm, Volker, Dr., W-2000 Hamburg 1 (DE)
(74) Vertreter: Peters, Carl Heinrich, Dipl.-Ing.

(56) Entgegenhaltungen:
- EP-A- 0 096 599
- EP-A- 0 378 454
- EP-A- 0 423 035
- EP-A- 0 480 833
- DE-A- 3 432 557
- FR-A- 2 659 768

## Beschreibung

Die Erfindung betrifft ein Verfahren zum Prüfen einer Wertkarte, die eine integrierte Schaltung mit einem Speicher für Werteinheiten und eine Prüfcodeschaltung enthält, mit Hilfe einer festen Station, mit der die Wertkarte in elektrische Verbindung gebracht wird, wobei von der Station ein Prüfwort zur Wertkarte übertragen wird und in der Prüfcodeschaltung aus dem Prüfwort nach einem geheimen Algorithmus Antwortdaten erzeugt und zur Station übertragen werden und dort mit nach dem gleichen Algorithmus aus dem Prüfwort erzeugten Antwortdaten verglichen werden.

Die Erfindung betrifft ferner eine Schaltungsanordnung zum Prüfen einer Wertkarte, die eine integrierte Schaltung mit einem Speicher für Werteinheiten und eine Prüfcodeschaltung sowie Mittel zum Verbinden der integrierten Schaltung mit einer festen Station enthält, wobei die Prüfcodeschaltung aus einem von der Station empfangenen Prüfwort nach einem geheimen, in der Prüfcodeschaltung festgelegten Algorithmus Antwortdaten erzeugt und an die Station abgibt, sowie eine derart ausgestaltete Wertkarte und eine dafür geeignete feste Station.

Derartige Wertkarten werden bereits für verschiedene Zwecke verwendet, um Leistungen wie Waren oder ähnliches zu erhalten, wobei vor dem Erhalten der Leistung eine entsprechende Anzahl von Werteinheiten im Speicher durch die Station als verbraucht markiert werden. Eine bekannte Anwendung stellt die Gebührenkarte für die Benutzung öffentlicher Fernsprecher dar, wo während des Gesprächs abhängig von dessen Dauer fortlaufend entsprechende Werteinheiten als verbraucht markiert werden (s. EP-A-0 480 833).

Eine Wertkarte, die meistens von dem die Leistung gewährenden Unternehmen gekauft wird, stellt einen gewissen Wert dar. Dadurch besteht ein Anreiz für Betrüger, nachgemachte oder gefälschte Wertkarten herzustellen und zu verwenden, für die der Betrüger dann kein Geld an das die Leistung gewährende Unternehmen gezahlt hat. Um dies zu verhindern oder zumindest sehr stark zu erschweren, ist in der integrierten Schaltung mit dem Speicher auch eine Prüfcodeschaltung enthalten, die aus einem von der Station ausgesandten Prüfwort nach einem geheimen Algorithmus Antwortdaten erzeugt und zur Station zurücküberträgt. Da dieser Algorithmus in der integrierten Schaltung verborgen ist, entweder durch Schaltverbindungen oder gespeicherte Daten oder durch beides, kann er praktisch nicht ermittelt und nachgeahmt werden. Das Prüfwort ist zweckmäßig eine Zufallszahl, so daß bei mehreren Benutzungen einer richtigen Wertkarte jeweils unterschiedliche Antwortdaten zurückgesandt werden, jedoch läßt sich auch aus der Auswertung von verschiedenen Prüfwörtern und zugehörigen Antwortdaten für betrügerische Zwecke nicht oder praktisch nicht der geheime Algorithmus ermitteln, wenn dieser komplex genug gewählt wird.

Es ist nun möglich, eine richtige Wertkarte zu verwenden, jedoch zwischen die Mittel für die Verbindung mit der Station, beispielsweise zwischen die Kontaktflächen bei einer galvanischen Verbindung, und dem Speicher mit der Prüfcodeschaltung einen Multiplexer zu schalten, der während der Prüfung der Wertkarte mittels des Prüfworts die Verbindung mit der richtigen Wertkarte herstellt, jedoch beim Markieren von Werteinheiten auf einen gefälschten Gebührenspeicher umschaltet, der von außerhalb manipulierbar, insbesondere löschbar ist, so daß auf diese Weise eine "ewige" Wertkarte erzeugt wird, mit der
beliebige Leistungen ohne weitere Bezahlung erhalten werden können.

Aufgabe der Erfindung ist es daher, ein Verfahren zum Prüfen einer Wertkarte der eingangs genannten Art anzugeben, das eine erhöhte Sicherheit gegen Betrugsversuche ermöglicht.

Diese Aufgabe wird erfindungsgemäß dadurch gelöst, daß die Station vor dem Aussenden des Prüfworts den wesentlichen Inhalt des Speichers für die Werteinheiten ermittelt, daß in der Prüfcodeschaltung die Antwortdaten abhängig vom Inhalt des Speichers erzeugt werden und daß nach einem Markieren von einer oder mehreren Werteinheiten im Speicher die Station das Prüfwort aussendet und die Antwortdaten vergleicht.

Durch die Erfindung wird also der Speicher für die Werteinheiten selbst mit in die Erzeugung der Antwortdaten aus dem Prüfwort einbezogen. Da der Speicher und die Prüfcodeschaltung auf einem einzigen Halbleiterplättchen gemeinsam integriert sind, ist es praktisch unmöglich, einen gefälschten, externen Speicher mit dem entsprechenden Eingang der Prüfcodeschaltung zu verbinden. Es ist vielmehr unvermeidlich, daß abzubuchende, d.h. zu markierende Werteinheiten tatsächlich in dem Speicher, der zu der richtigen Wertkarte mit der ordnungsgemäßen Prüfcodeschaltung gehört, markiert werden. Somit ist eine betrügerische Umschaltung auf einen gefälschten Speicher praktisch nicht möglich.

Bei den bekannten Wertkarten ist es grundsätzlich möglich, eine richtige Wertkarte mit einer Nachbildung einer Station, beispielsweise mit einem Rechner, zu verbinden und eine große Zahl unterschiedlicher Prüfwörter zuzuführen, um die Antwortdaten zu analysieren und daraus möglicherweise doch den geheimen Algorithmus zu ermitteln. Um diese Möglichkeit auszuschließen, ist es nach einer Weiterbildung der Erfindung zweckmäßig, daß die Station nur nach einem Markieren von Werteinheiten ein Prüfwort aussendet. Dadurch sind mit jeder richtigen Wertkarte nur eine begrenzte Anzahl Versuche für das Auffinden des geheimen Algorithmus möglich, und danach ist die Wertkarte unbrauchbar, so daß diese Versuche auch kostspielig und damit nicht lohnend sind. Die Tatsache, daß zunächst eine Abbuchung auf der Wertkarte ohne Kontrolle auf deren Richtigkeit erfolgt, ist in der Praxis nicht weiter nachteilig.

Die Erzeugung von Antwortdaten aus dem Prüfwort unter Berücksichtigung von Daten über den Speicherinhalt kann auf verschiedene Weise erfolgen. Eine schaltungstechnisch leicht durchführbare Möglichkeit ist nach einer weiteren Ausgestaltung der Erfindung dadurch gekennzeichnet, daß in der Prüfcodeschaltung die Antwortdaten nach einem von mehreren Algorithmen erzeugt werden, der abhängig von dem wesentlichen Inhalt des Speichers ausgewählt wird. Durch das Umschalten des Algorithmus wird es noch zusätzlich erschwert, den jeweils verwendeten Algorithmus zu ermitteln.

Eine weitere Aufgabe der Erfindung besteht darin, eine Schaltungsanordnung zum Prüfen einer Wertkarte der eingangs genannten Art anzugeben, die eine erhöhte Sicherheit gegenüber betrügerischen Manipulationen bietet.

Diese Aufgabe wird erfindungsgemäß dadurch gelöst, daß die Prüfcodeschaltung mit dem Speicher gekoppelt ist, um Daten über den Inhalt des Speichers zu erhalten und abhängig von diesen Daten die Antwortdaten zu erzeugen. Beim Einsatz derartiger Wertkarten ist es praktisch nicht möglich, mit Hilfe eines zusätzlich manipulierbaren Speichers betrügerisch Leistungen unberechtigt zu erhalten.

Weitere Ausgestaltungen der Erfindung sind in den übrigen Unteransprüchen gekennzeichnet.

Ausführungsbeispiele der Erfindung werden nachstehend anhand der Zeichnung näher erläutert. Es zeigen:
Fig. 1 ein Blockschaltbild einer Wertkarte nach dem Stand der Technik in Verbindung mit einer Station,
Fig. 2 das Blockschaltbild einer betrügerischen Anordnung mit einem gefälschten Speicher,
Fig. 3 eine erfindungsgemäße Wertkarte in Verbindung mit einer Station.

Bei der nachfolgenden Beschreibung der Ausführungsbeispiele wird angenommen, daß es sich bei der Wertkarte um eine Gebührenkarte für die Benutzung eines öffentlichen Telefons handelt, wobei die Station den Telefonapparat darstellt. Es ist jedoch klar, daß die Beschreibung grundsätzlich auch für andere Arten von Wertkarten gilt.

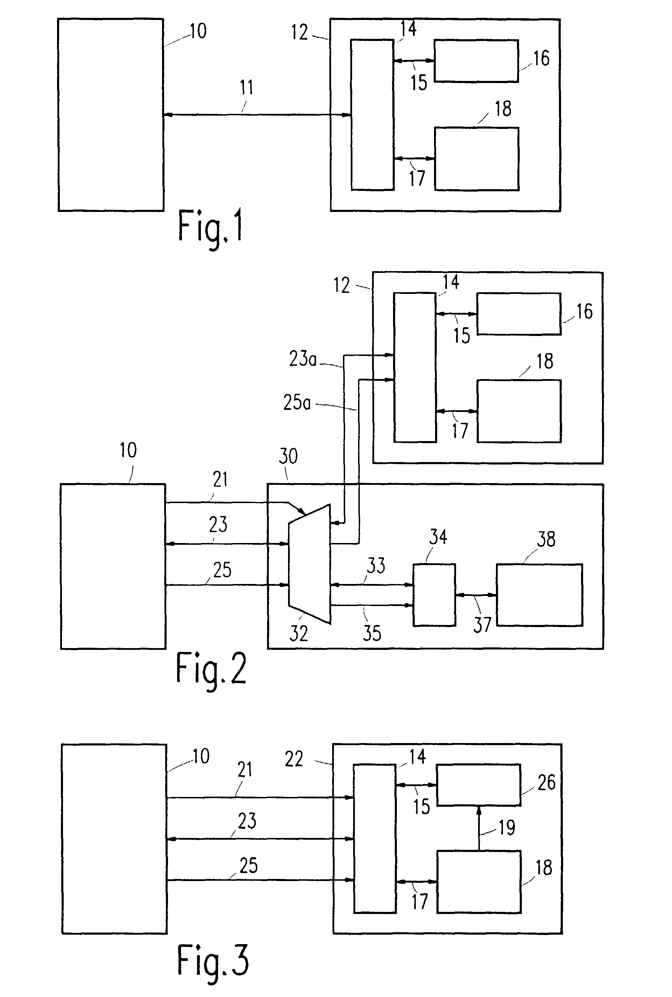

In Fig. 1 ist eine Wertkarte 12 über eine Verbindung 11 zur Übertragung elektrischer Signale mit einer Station 10 verbunden. Die Verbindung 11 besteht dabei üblicherweise aus mehreren parallelen Leitungen, über die außer der Versorgungsspannung für die Wertkarte 12 serielle Daten, ein Taktsignal und auch ein Rücksetzsignal übertragen werden. Grundsätzlich ist es jedoch möglich, die Verbindung 11 auch anders zu realisieren, beispielsweise als induktive Kopplung über ein oder mehrere Spulenpaare.

Die Wertkarte 12 enthält eine Steuerschaltung 14, die beispielsweise Signale regeneriert und verstärkt und vorverarbeitet, sowie eine Prüfcodeschaltung 16, die über die Verbindung 15 mit der Steuerschaltung 14 verbunden ist, und einen Speicher 18 für Werteinheiten, der über die Verbindung 17 mit der Steuerschaltung 14 verbunden ist. Die Verbindungen 15 und 17 können ebenfalls als mehrere parallele Leitungen ausgeführt sein.

Wenn im hier beschriebenen Beispiel ein Telefongespräch geführt werden soll, wird die Wertkarte 12 in eine entsprechende Öffnung des Telefongeräts 10 gesteckt und damit die Verbindung 11 hergestellt. Das Telefongerät 10 sendet nun zunächst ein Prüfwort aus, das von der Steuerschaltung 14 der Prüfcodeschaltung 16 zugeführt wird. Diese verarbeitet das Prüfwort nach einem darin fest enthaltenen, geheimen Algorithmus und erzeugt Antwortdaten, die über die Verbindung 15 und die Steuerschaltung 14 zum Telefongerät 10 zurückübertragen und dort mit Antwortdaten verglichen werden, die aus demselben Prüfwort mit demselben Algorithmus wie in der Prüfcodeschaltung 16 der Wertkarte 12 erzeugt worden sind. Falls keine Gleichheit festgestellt wird, wird der gesamte Vorgang unmittelbar abgebrochen, da dann angenommen wird, daß es sich um eine falsche bzw. gefälschte Wertkarte handelt, und damit kann ein Telefongespräch nicht zustandekommen.

Falls der Vergleich der Antwortdaten jedoch richtig ausfällt, wird anschließend von dem Telefongerät 10 über die Verbindung 11 ein Befehl übertragen, der über die Steuerschaltung 14 und die Verbindung 17 in dem Speicher 18 eine noch nicht verbrauchte Werteinheit als verbraucht markiert. Der Speicher 18 enthält beispielsweise für jede Werteinheit eine Speicherzelle, und die Steuerschaltung 14 adressiert über die Verbindung 17 den Speicher 18 in einer festgelegten Reihenfolge, bis die erste Speicherzelle gefunden ist, die eine noch unverbrauchte Werteinheit enthält. Sobald diese Werteinheit durch die Dauer des Telefongesprächs verbraucht ist, wird erneut ein Befehl von dem Telefongerät 10 zur Wertkarte 12 übertragen und eine weitere Werteinheit als verbraucht markiert, usw.

Hierbei ist es naturgemäß erforderlich, daß vor dem Markieren der ersten Werteinheit das Telefongerät 10 zunächst den Inhalt des Speichers 18 abfragt, beispielsweise wieviele Werteinheiten noch unverbraucht sind, so daß nur maximal diese Anzahl von Werteinheiten anschließend noch markiert wird und bei weiterer Gesprächsdauer das Gespräch unterbrochen wird. Eine andere Möglichkeit ist, daß die Steuerschaltung 14 ein entsprechendes Signal zum Fernsprechgerät 10 überträgt, wenn die letzte Werteinheit bereits markiert ist. In jedem Falle ist es dann unmöglich, mit einer Karte, auf der alle Werteinheiten markiert sind, noch ein Telefongespräch zu beginnen.

In Fig. 2 ist eine Anordnung als Blockschaltbild dargestellt, mit der es möglich ist, den Speicher 18 der Wertkarte 12 durch einen externen, manipulierbaren Speicher 38 zu ersetzen. Dafür wird eine gefälschte Wertkarte 30 verwendet, die einen Multiplexer 32 enthält, der die Verbindungen 23 für die Datenübertragung und 25 für das Taktsignal wahlweise mit den Verbindungen 23a und 25a verbindet, die auf eine richtigte Wertkarte 12 führen, oder die Verbindungen 23 und 25 werden mit Verbindungen 33 und 35 der gefälschten Karte 30 gekoppelt, die auf eine Steuerschaltung 34 führen, die über eine Verbindung 37 mit einem Speicher 38 gekoppelt ist. Die Steuerschaltung 34 enthält im wesentlichen alle Elemente der Steuerschaltung 14, die für die Ansteuerung des Speichers 38, d.h. das Auslesen und Beschreiben des Speichers 38, erforderlich sind. Der Multiplexer 32 wird hier durch ein Rücksetzsignal auf der Leitung 21 umgeschaltet, wobei dieses Signal im übrigen auch mit den Elementen der gefälschten Wertkarte 30 und der richtigen Wertkarte 12 verbunden sein kann. Dieses Rücksetzsignal auf der Leitung 21 erscheint nämlich, wenn ein Prüfwort von dem Fernsprechgerät 10 ausgesandt und die Antwortdaten erwartet werden.

In diesem Zustand schaltet der Multiplexer 32 auf die oberen Verbindungen 23a und 25a, so daß nun die richtigte Wertkarte 12 mit dem Fernsprechgerät 10 gekoppelt ist. Damit werden in der Prüfcodeschaltung 16 durch den geheimen Algorithmus die richtigen Antwortdaten gebildet und zum Telefongerät 10 übertragen. Dieses erkennt eine richtige Wertkarte, und überträgt anschließend das erste Kommando zum Markieren einer Werteinheit. Dabei ist nun der Multiplexer 32 in die andere Lage geschaltet, d.h. nunmehr ist der gefälschte Speicher 38 mit dem Telefongerät 10 verbunden. Dieser Speicher 38 kann beispielsweise vor jeder Benutzung gelöscht werden, d.h. alle Speicherzellen enthalten unverbrauchte Werteinheiten, so daß mit der in Fig. 2 dargestellten Anordnung beliebig oft Telefongespräche geführt werden können. Die maximale Länge des einzelnen Telefongesprächs ist zwar durch die Kapazität des Speichers 38 vorgegeben, jedoch kann diese entsprechend der Kapazität von Speichern in Wertkarten für die maximale Anzahl Gebühreneinheiten gewählt werden.

Diese beschriebene Betrugsmöglichkeit ist bei der in Fig. 3 dargestellten Anordnung nicht mehr vorhanden. Hier ist die Wertkarte 22 im wesentlichen so aufgebaut wie die Wertkarte 12 in Fig. 1, lediglich die Prüfcodeschaltung 26 in Fig. 3 ist abweichend von der Prüfcodeschaltung 16 in Fig. 1. Der Unterschied besteht darin, daß die Prüfcodeschaltung 26 außer dem Prüfwort über die Verbindung 15 außerdem über die Verbindung 19 Daten über den wesentlichen Inhalt des Speichers 18 empfängt. Diese Daten enthalten insbesondere eine Angabe, wieviele Werteinheiten in dem Speicher 18 noch unverbraucht sind bzw. wieviele Werteinheiten bereits als verbraucht markiert sind. Abhängig von diesen Daten über den Inhalt des Speichers 18 erzeugt die Prüfcodeschaltung 26 bei dem gleichen zugeführten Prüfwort unterschiedliche Antwortdaten, beispielsweise indem das Prüfwort durch die Daten über den Inhalt des Speichers ergänzt wird und daraus nach einem Algorithmus die Antwortdaten ermittelt werden oder indem die über die Verbindung 19 zugeführten Daten den Algorithmus, mittels dem die Antwortdaten aus einem Prüfwort gebildet werden, umschalten bzw. indem diese Daten vom Speicher 18 einen von mehreren Algorithmen in der Prüfcodeschaltung 26 auswählen.

Um in dem Fernsprechgerät 10 die von der Prüfcodeschaltung 26 über die Verbindung 15, die Steuerschaltung 14 und die Datenverbindung 23 zurückgesandten Antwortdaten richtig auswerten zu können, ist es nun notwendig, daß vor dem Empfang der Antwortdaten, d.h. zweckmäßig vor dem Aussenden des Prüfworts, zunächst der Inhalt des Speichers 18 abgefragt wird, indem das Fernsprechgerät 10 über die Datenverbindung 23 ein entsprechendes Kommando an die Steuerschaltung 14 sendet, die über die Verbindung 17 den Inhalt des Datenspeichers 18 auswertet. Aufgrund dieser Information über den Inhalt des Speichers 18 kann dann das Fernsprechgerät 10 aus dem ausgesandten Prüfwort die Antwortdaten bilden, die auch von einer korrekten Wertkarte 22 aufgrund des ausgesandten Prüfworts erwartet werden.

Eine noch weitergehende Möglichkeit besteht darin, daß die Station nach dem Einführen der Wertkarte zunächst ohne Prüfung den Inhalt des Speichers darin ausliest, dann eine unverbrauchte Werteinheit im Speicher markiert und dies gegebenenfalls durch erneutes Auslesen des Speichers überprüft und nun erst ein Prüfwort aussendet. Sobald die daraus erzeugten Antwortdaten in der Station als richtig erkannt werden, wird die Telefonverbindung hergestellt, andernfalls wird die Verbindung abgebrochen bzw. die Benutzung des Fernsprechgeräts verhindert. Ein solcher Ablauf der Schritte, der durch einen entsprechenden Aufbau der Steuerschaltung der Wertkarte zwangsweise vorgegeben ist, kann verhindern bzw. zusätzlich erschweren, daß der geheime Algorithmus durch eine große Zahl von Versuchen mittels eines Rechners erkannt wird. Es ist nämlich möglich, die korrekte Wertkarte mit einer Nachbildung einer Station, also mit einem Rechner, zu verbinden und eine große Anzahl unterschiedlicher Prüfwörter zuzuführen und die daraus gewonnenen Antwortdaten zu analysieren. Wenn aber in der beschriebenen Weise Antwortdaten nur nach einer vorherigen Abbuchung einer Werteinheit zurückgesandt werden, ist die Anzahl der Versuche mit einer Wertkarte durch die Anzahl Werteinheiten in deren Speicher begrenzt, und anschließend ist die Wertkarte durch die Versuche verbraucht, so daß diese Methode zum Ausspähen des geheimen Algorithmus sehr kostspielig ist.

In jedem Falle ist es erforderlich, den Speicher 18 der richtigen Wertkarte 22 zu verwenden. Wenn nämlich eine gefälschte Wertkarte wie die Wertkarte 30 in Fig. 2 verwendet wird, würde das Fernsprechgerät 10 die Antwortdaten aufgrund des abgefragten Inhalts des Speichers 38 berechnen, die dann unterschiedlich zu den Antwortdaten sind, die die Prüfcodeschaltung 16 aufgrund des Inhalts des Speichers 18 erzeugen würde. Aber selbst wenn die Umschaltung des Multiplexers 32 so erfolgt, daß bei Abfrage des Speicherinhalts durch das Fernsprechgerät 10 jeweils auf die korrekte Wertkarte 12 umgeschaltet wird, wird eine betrügerische Manipulation spätestens nach der Markierung der ersten Werteinheit festgestellt, weil im Betrugsfall der Inhalt des Speichers 18 unverändert bleibt, jedoch das Fernsprechgerät 10 von einem um eine Werteinheit veränderten Inhalt des Speichers 18 bei der Ermittlung der Antwortdaten ausgeht.

Da bei der Anordnung nach Fig. 3 die in der Wertkarte 22 enthaltenen Elemente auf einem Halbleiterchip integriert sind, ist es andererseits praktisch nicht möglich, die Verbindung 19 zur Prüfcodeschaltung 26 mit einem Ausgang des gefälschten Speichers 38 zu verbinden. Die betrügerische Verwendung eines gefälschten Speichers ist damit nicht mehr möglich.

## Patentansprüche

1. Verfahren zum Prüfen einer Wertkarte (12), die eine integrierte Schaltung mit einem Speicher (18) für Werteinheiten und eine Prüfcodeschaltung (16,26) enthält, mit Hilfe einer festen Station (10), mit der die Wertkarte in elektrische Verbindung gebracht wird, wobei von der Station ein Prüfwort zur Wertkarte übertragen wird und in der Prüfcodeschaltung aus dem Prüfwort nach einem geheimen Algorithmus Antwortdaten erzeugt und zur Station übertragen werden und dort mit nach dem gleichen Algorithmus aus dem Prüfwort erzeugten Antwortdaten verglichen werden,
dadurch gekennzeichnet, daß die Station vor dem Aussenden des Prüfworts den wesentlichen Inhalt des Speichers (18) für die Werteinheiten ermittelt, daß in der Prüfcodeschaltung (26) die Antwortdaten abhängig vom Inhalt des Speichers erzeugt werden und daß nach einem Markieren von einer oder mehreren Werteinheiten im Speicher die Station das Prüfwort aussendet und die Antwortdaten vergleicht.

2. Verfahren nach Anspruch 1,
dadurch gekennzeichnet, daß die Station nur nach dem Markieren von Werteinheiten ein Prüfwort aussendet.

3. Verfahren nach Anpruch 1 oder 2,
dadurch gekennzeichnet, daß in der Prüfcodeschaltung die Antwortdaten nach einem von mehreren Algorithmen erzeugt werden, der abhängig von dem wesentlichen Inhalt des Speichers ausgewählt wird.

4. Schaltungsanordnung zur Durchführung des Verfahrens nach einem der Ansprüche 1 bis 3 zum Prüfen einer Wertkarte (12), die eine integrierte Schaltung mit einem Speicher (18) für Werteinheiten und eine Prüfcodeschaltung (16,26) sowie Mittel zum Verbinden der integrierten Schaltung mit einer festen Station (10) enthält, wobei die Prüfcodeschaltung aus einem von der Station empfangenen Prüfwort nach einem geheimen, in der Prüfcodeschaltung festgelegten Algorithmus Antwortdaten erzeugt und an die Station abgibt,
dadurch gekennzeichnet, daß die Prüfcodeschaltung (26) mit dem Speicher (18) gekoppelt ist, um Daten über den Inhalt des Speichers zu erhalten und abhängig von diesen die Antwortdaten zu erzeugen.

5. Schaltungsanordnung nach Anspruch 4,
dadurch gekennzeichnet, daß die Prüfcodeschaltung (26) abhängig von den Daten über den Inhalt des Speichers (18) auf verschiedene Algorithmen zur Erzeugung der Antwortdaten umschaltbar ist.

6. Wertkarte mit einer Schaltungsanordnung nach Anspruch 4 oder 5.

7. Feste Station (10) zur Durchführung des Verfahrens nach einem der Ansprüche 1 bis 3 mit Mitteln zum Koppeln mit einer Wertkarte und mit Mitteln zum Empfangen von Daten über den Inhalt des Speichers von dieser Wertkarte, gekennzeichnet durch Mittel zum Erzeugen von erwarteten Antwortdaten in Abhängigkeit von den empfangenen Daten über den Inhalt des Speichers (18) der Wertkarte.

8. Feste Station nach Anspruch 7,
dadurch gekennzeichnet, daß die Mittel zum Erzeugen von erwarteten Antwortdaten zum Umschalten abhängig von den empfangenen Daten über den Inhalt des Speichers der Wertkarte auf verschiedene Algorithmen zur Erzeugung der erwarteten Antwortdaten eingerichtet sind.

## Claims

1. A method of checking a credit card (12), comprising an integrated circuit with a memory (18) for value units and a test code circuit (16,26), by means of a fixed station (10) whereto the credit card is electrically connected, the station transmitting a test word to the credit card and the test code circuit generating, from the test word, reply data in conformity with a secret algorithm, which reply data is transmitted to the station in which it is compared with the reply data generated from the test word in conformity with the same algorithm, characterized in that prior to the transmission of the test word the station determines the essential content of the memory (18) for the value units, that in the test code circuit (26) the reply data is generated in dependence on the content of the memory, and that after the marking of one or more value units in the memory the station transmits the test word and compares the reply data.

2. A method as claimed in Claim 1, characterized in that the station transmits a test word only after the marking of value units.

3. A method as claimed in Claim 1 or 2, characterized in that in the test code circuit the reply data is generated according to one of a plurality of algorithms that is selected in dependence on said essential content of the memory.

4. A circuit arrangement carrying out the method claimed in one of the Claims 1 to 3 for checking a credit card (12), comprising an integrated circuit with a memory (18) for value units and a test code circuit (16, 26) as well as means for connecting the integrated circuit to a fixed station (10), the test code circuit generating reply data from a test word, received from the station, in conformity with a secret algorithm stored in the test code circuit, which reply data is applied to the station, characterized in that the test code circuit (26) is coupled to the memory (18) and receives data concerning the content of the memory and generates the reply data in dependence on this data.

5. A circuit arrangement as claimed in Claim 4, characterized in that, in dependence on the data concerning the contents of the memory (18), the test code circuit (26) can be switched to different algorithms for generating the reply data.

6. A credit card comprising a circuit as claimed in Claim 4 or 5.

7. A fixed station (10) for carrying out the method claimed in one of the Claims 1 to 3, including means for coupling to a credit card and means for receiving data concerning the contents of the memory of the credit card, characterized in that it includes means for generating expected reply data in dependence on the received data concerning the content of the memory (18) of the credit card.

8. A fixed station as claimed in Claim 7, characterized in that the means for generating expected reply data are arranged to switch over, in dependence on the received data concerning the contents of the memory of the credit card, to different algorithms for generating the expected reply data.

## Revendications

1. Procédé de contrôle d'une carte à unités (12) qui contient un circuit intégré avec une mémoire (18) pour des unités de valeur et un circuit de codage de contrôle (16, 26) à l'aide d'une station fixe (10) avec laquelle la carte à unités est mise en liaison électrique, un mot de contrôle étant transmis de la station vers la carte à unités et des données de réponse étant produites dans le circuit de codage de contrôle à partir du mot de contrôle selon un algorithme secret et transmises vers la station pour y être comparées avec des données de réponse produites selon le même algorithme à partir du mot de contrôle,
caractérisé en ce que la station détermine le contenu essentiel de la mémoire (18) pour les unités de valeur avant la transmission du mot de contrôle, que les données de réponse sont produites dans le circuit de codage de contrôle (26) en fonction du contenu de la mémoire et qu'après le marquage d'une ou plusieurs unités de valeur dans la mémoire, la station transmet le mot de contrôle et compare les données de réponse.

2. Procédé selon la revendication 1, caractérisé en ce que la station ne transmet un mot de contrôle qu'après le marquage d'unités de valeur.

3. Procédé selon la revendication 1 ou 2,
caractérisé en ce que les données de réponse sont produites dans le circuit de codage de contrôle selon un de plusieurs algorithmes sélectionnés en fonction du contenu essentiel de la mémoire.

4. Circuit de mise en oeuvre du procédé selon l'une des revendications 1 à 3 pour le contrôle d'une carte à unités (12), qui contient un circuit intégré avec une mémoire (18) pour des unités de valeur et un circuit de codage de contrôle (16, 26) ainsi que des moyens pour la liaison du circuit intégré avec une station fixe (10), le circuit de codage de contrôle produisant à partir d'un mot de contrôle reçu de la station des données de réponse selon un algorithme secret déterminé dans le circuit de codage de contrôle et les délivre à la station,
caractérisé en ce que le circuit de codage de contrôle (26) est relié à la mémoire (18) pour obtenir des données sur le contenu de la mémoire et produire les données de réponse en fonction de celles-ci.

5. Circuit selon la revendication 4,
caractérisé en ce que le circuit de codage de contrôle (26) peut être commuté en fonction des données sur le contenu de la mémoire (18) sur différents algorithmes en vue de la production des données de réponse.

6. Carte à unités avec un circuit selon l'une des revendications 4 ou 5,

7. Station fixe (10) en vue de la mise en oeuvre du procédé selon l'une des revendications 1 ou 2 avec des moyens d'accouplement à une carte à unités et avec des moyens de réception de données sur le contenu de la mémoire depuis cette carte à unités,
caractérisée par des moyens de production de données de réponse attendues en fonction des données reçues sur le contenu de la mémoire (18) de la carte à unités.

8. Station fixe selon la revendication 7,
caractérisée en ce que les moyens de production de données de réponse attendues en vue de la commutation sont agencés en fonction des données reçues sur le contenu de la mémoire de la carte à unités sur différents algorithmes en vue de la production des données de réponse attendues.
